(19) Europäisches Patentamt

European Patent Office

Office européen des brevets

(11) Veröffentlichungsnummer: **0 098 353**
**A2**

(12) # EUROPÄISCHE PATENTANMELDUNG

(21) Anmeldenummer: 83103952.4

(22) Anmeldetag: 22.04.83

(51) Int. Cl.³: **B 60 C 11/00,** B 60 C 11/18

(30) Priorität: 26.06.82 DE 3223959

(43) Veröffentlichungstag der Anmeldung: 18.01.84
**Patentblatt 84/3**

(84) Benannte Vertragsstaaten: **AT CH DE FR GB IT LI SE**

(71) Anmelder: **Continental Gummi-Werke Aktiengesellschaft, Königsworther Platz 1 Postfach 169, D-3000 Hannover 1 (DE)**

(72) Erfinder: **Burchert, Helmut, Dr.-Ing., Brillantweg 4, D-3008 Garbsen 1 (DE)**
Erfinder: **Kaiser, Günter, Dr. rer., Dipl.-Chem., Schieferkamp 23, D-3000 Hannover 91 (DE)**

(54) **Fahrzeugluftreifen für die Winterverwendung.**

(57) Bei diesen Luftreifen, die als Gürtelreifen ausgebildet sind, ist der oberhalb des Gürtels befindliche Teil der Laufstreifenzone zweischichtig ausgeführt. Oberhalb einer Grundschicht ist eine die Lauffläche aufweisende Oberschicht vorgesehen. Um Schäden durch erhöhte Temperatureinwirkungen auszuschließen und somit eine Hochgeschwindigkeitstauglichkeit zu erreichen und ferner zur Vermeidung von Rißbildungen im Profilgrund, wird für die dem Gürtel zugekehrte Grundschicht ein Synthesekautschuk mit einem dynamischen E-Modul von etwa 6 bis 15 N/mm² und einem dynamischen Verlustmodul von etwa 1,5 bis 4,0 N/mm² benutzt. Die so ausgeführte Grundschicht soll eine Härte erhalten, die größer ist als diejenige der Oberschicht, so um etwa 10 bis 15 Shore Grade A härter sein. Insbesondere soll die Naßrutschfestigkeit der Grundschicht größer sein als die Naßrutschfestigkeit der Oberschicht. Die Unterschiede sollen etwa 4 bis 7% betragen. Auch kann die Trennfläche zwischen der Oberschicht und der Grundschicht oberhalb des Profilgrundes angeordnet sein.

Continental Gummi-Werke Aktiengesellschaft, 3000 Hannover


Fahrzeugluftreifen für die Winterverwendung


Die Erfindung betrifft einen im wesentlichen aus Gummi od. dgl. bestehenden, mit Verstärkungseinlagen versehenen, als Gürtelreifen ausgebildeten Fahrzeugluftreifen für die Winterverwendung, wobei der oberhalb des Gürtels befindliche Teil der Laufstreifenzone zweischichtig ausgeführt ist und oberhalb einer Grundschicht (base) eine die Lauffläche bildende Oberschicht (cap) aufweist und wobei ferner die Oberschicht eine Härte von etwa 55 bis 63 Shore A aufweist.

Bei den bekannten Fahrzeugluftreifen dieser Art besteht die Gefahr, daß bei der heute geforderten Hochgeschwindigkeitstauglichkeit in der Zenitpartie des Reifens, insbesondere zwischen den die Lauffläche bildenden Klötzen einerseits und dem Gürtel andererseits Schäden durch erhöhte Temperatureinwirkung entstehen. Hinzu kommen Schäden durch Rißbildung im Profilgrund.

Demgemäß liegt der Erfindung im wesentlichen die Aufgabe zugrunde, einen für die Winterverwendung geeigneten Fahrzeugluftreifen zu schaffen, der für vergleichsweise hohe Geschwindigkeiten geeignet ist, und bei dem das gewöhnlich als Klotz- oder Rippenprofil (gegebenenfalls mit Feineinschnitten) ausgebildete Laufflächenteil eine ausreichende Standfestigkeit und Halterung der Klötze und Rippen gewährleistet.

Zur Lösung dieser Aufgabe wird erfindungsgemäß vorgeschlagen, die Grundschicht aus einem Synthesekautschuk mit einem dynamischen Elastizitätsmodul von etwa 6 bis 15 $N/mm^2$ und einem dynamischen Verlustmodul von etwa 1,5 bis 4,0 $N/mm^2$ zu verwenden, wobei diese Grundschicht eine Härte aufweist, die größer ist als diejenige der Oberschicht und diese Härte etwa 6o bis 75 Shore A, insbesondere aber 65 bis 70 Shore A beträgt.

Hierbei geht die Erfindung von der Erkenntnis aus, daß der vorgenannte für die Grundschicht gewählte Kautschuk in vergleichsweise großem Maße temperaturbeständig ist und infolge seiner gesteigerten Härte vergleichsweise geringe Verformungen erfährt, die eine entsprechend gute Fundamentierung der Klötze bzw. Rippen des Laufflächenprofils zur Folge hat.

Demgemäß ist der erfindungsgemäße Reifen bei vergleichsweise niedrigen Außentemperaturen für die Winterverwendung, also auf Eis, Matsch und Schnee, für hohe Geschwindigkeiten geeignet, zumal die vorgenannte Kautschukmischung für die Grundschicht über eine hohe Rißbeständigkeit verfügt.

Darüber hinaus ist es zweckmäßig, für die Grundschicht SBR-Anteile von 50 bis 100 und BR-Anteile von 50 bis 0 zu wählen, bei einer Rußfüllung, die 45 bis 60 K % beträgt, also vergleichsweise niedrig ist. Durch diese Maßnahme in Verbindung mit der vergleichsweise hohen Härte kann nur eine kleine Verformung der Grundschicht eintreten, die die gewünschte niedrige Wärmebildung zur Folge hat und weiterhin eine reduzierte Rißanfälligkeit im Profilgrund.

In Verfolg des Erfindungsgedankens erhält die Grundschicht somit Eigenschaften, die im Regelfalle nur für die Laufstreifen von Sommerreifen gefordert und verwirklicht werden. Dieser Vorschlag eröffnet auch die Möglichkeit, die Trennfläche zwischen der Grundschicht und der Oberschicht so zu legen, daß sie sich radial außerhalb des Profilgrundes der Reifenprofilierung be-

findet, z.B. 4 mm darüber. Unter diesen Voraussetzungen kann nämlich nach Abnutzung der Oberschicht die nunmehr frei gewordene Grundschicht die Lauffläche für einen Sommerreifen bilden, die anhand der obigen Vorschläge eine Naßrutschfestigkeit aufweist, welche Größer ist als diejenige der ursprünglichen Oberschicht; dabei wird eine Naßrutschfestigkeit angestrebt, die etwa 4 bis 7 % größer ist als die Naßrutschfestigkeit der ursprünglichen Oberschicht für die Winterverwendung.

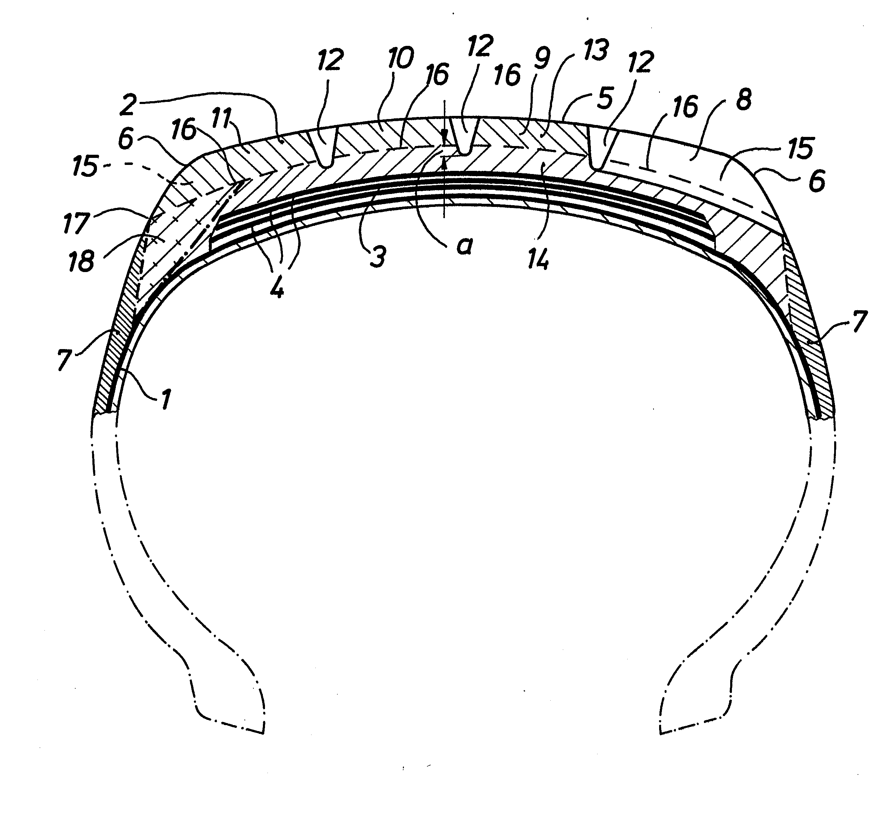

Weitere Einzelheiten der Erfindung werden anhand der Zeichnung erläutert, in der ein Ausführungsbeispiel der Erfindung dargestellt ist.

Die Abbildung zeigt einen radialen Teilschnitt durch einen Fahrzeugluftreifen für die Winterverwendung.

Die Karkasse 1 des Luftreifens ist als Radialkarkasse ausgeführt. Zwischen dem Laufstreifen 2 und der Karkasse 1 befindet sich ein zugfester, sich im wesentlichen über die Breite des Laufstreifens 2 erstreckender Gürtel 3, der aus drei übereinanderliegenden Cordgewebelagen 4 besteht. Die Lauffläche 5 des Laufstreifens 2 geht über eine abgerundete Schulter in die Reifenflanken bzw. den Seitengummistreifen 7 über.

Im übrigen wird die Lauffläche 5 gebildet von vier Klotzreihen 8, 9, 10 und 11.

Diese Klotzreihen sind durch drei meist zickzackförmige Nuten 12 voneinander getrennt. In üblicher Weise bestehen die seitlich außen gelegenen Klotzreihen 8 und 11 aus im Grundriß etwa rechteckigen, quer zur Reifenumfangsrichtung verlaufenden Klötzen, die durch quer verlaufende Nuten 15 voneinander getrennt sind. Da diese Klötze in die Reifenschultern 6 ragen bzw. diese bilden, besteht im Bereich dieser Klötze gerade bei Winterreifen eine erhöhte Beanspruchung durch Wärmebildung.

Der Laufstreifen 2 wird von einer Grundschicht 14 und einer darüber befindlichen Oberschicht 13 gebildet. Die Grundschicht 14 schließt dabei unmittelbar an die Karkasse 1 und den Gürtel 3 bzw. die Gummierung dieser Elemente an, während die Oberschicht 13 die Lauffläche 5 und die abgerundeten Schultern bildet.

Die Trennfläche zwischen den beiden Schichten 13 und 14 ist mit 16 bezeichnet. Sie befindet sich bei Betrachtung der Nuten 12 oberhalb des Nutgrundes, und zwar etwa 4 mm im Abstand hiervon. Dieses Maß ist mit a bezeichnet.

Eine solche Teilung innerhalb des Laufstreifens 2 hat zur Folge, daß nach Abnutzung der Oberschicht 13 die Grundschicht 14 die eigentliche Lauffläche des Reifens bilden kann.

Wichtig ist nun, daß für die Oberschicht 13 und die Grundschicht 14 bestimmte nachstehend aufgeführte Gummimischungen verwendet werden.

Für die Oberschicht 13 wird vorzugsweise eine Naturkautschukmischung, gegebenenfalls aber auch eine Synthesekautschukmischung benutzt.

Die Naturkautschukmischung weist dabei folgende Hauptmerkmale auf:

$$
\begin{array}{lll}
\text{NR :} & 50 - 100 & \text{Teile} \\
\text{BR :} & 50 - \phantom{0}0 & \text{Teile} \\
\text{oder SBR :} & 50 - \phantom{0}0 & \text{Teile} \\
\end{array}
$$

Rußfüllung hoch: 60 - 90 K %
weich eingestellt: ca. 55 - 65° Sh. A.

Eine besonders geeignete Synthese-Kautschukmischung soll dabei wie folgt ausgeführt sein:

BR : 50 - 70 Teile

SBR: 50 - 30 Teile

Füllstoffgehalt hoch:  Ruß: 50 - 70 K %

Kieselsäure: 20 - 50 K %

weich eingestellt:  ca. 55 - 65° Sh. A

In Kombination damit wird die Grundschicht 14 im wesentlichen durch die folgenden Daten bestimmt:

SBR: 50 - 100 Teile

BR : 50 -  0 Teile

Rußfüllung niedrig:  45 - 60 K %

hart eingestellt : ca. 60 - 75° Sh. A

vorzugsweise : 65 - 70° Sh. A

dynamischer Elastizitätsmodul: 8 - 12 $N/mm^2$

dynamischer Verlustmodul : 1,5 - 3,0 $N/mm^2$

Die Verwendung der vorgenannten Kautschukmischungs-Kombinationen hat den Vorteil, daß die Grundschicht 14 nunmehr über eine große Thermostabilität verfügt. Zugleich wird eine hohe Rißbeständigkeit erreicht und ein stabiles Fundament für die Klötze der Lauffläche, insbesondere aber für diejenigen der Klotzreihen 11 und 8.

Die Erfindung strebt weiterhin eine Verbesserung des Reifens im Bereich der Reifenschultern 6 an.

Die Trennfläche 16 wird aus diesem Grunde so gestaltet, daß sie insgesamt gesehen etwa parallel zum Mittelteil der Lauffläche 5 verlaufend bis an die Außenhaut des Reifens bei 17 reicht, so daß demgemäß zu beiden Seiten der Gürtelränder zwischen diesen, der Außenfläche des Reifens und der Karkasse ein dreieckiger Bereich 18 aus der erwähnten Kautschukmischung für die Grundschicht 14 entsteht.

0098353

Die Messung der dynamischen Moduli erfolgt nach DIN 53513 bei einer Frequenz von 7,5 Hz und einer Temperatur von 25 $^{\circ}$ C.

Besonders günstige Ergebnisse ergeben sich darüber hinaus dann, wenn sich der vorgenannte dynamische Verlustmodul zum dynamischen E-Modul verhält wie etwa 0,25 bis 0,4.

Patentansprüche:

1. Im wesentlichen aus Gummi oder gummiähnlichen Stoffen/mit bestehender, Verstärkungseinlagen versehener, als Gürtelreifen ausgebildeter Fahrzeugluftreifen für die Winterverwendung, wobei der oberhalb des Gürtels befindliche Teil der Laufstreifenzone zweischichtig ausgeführt ist und oberhalb einer Grundschicht (base) eine die Lauffläche bildende Oberschicht (cap) angeordnet ist und wobei ferner die Oberschicht mit den von ihr gebildeten Laufflächenelementen eine Härte von etwa 55 bis 63 Shore A aufweist, dadurch gekennzeichnet, daß die Grundschicht (14) als Synthese-Kautschumischung mit einem dynamischen Elastizitätsmodul von etwa 8 bis 15 N/mm$^2$ und einem dynamischen Verlustmodul von etwa 1,5 bis 3,0 N/mm$^2$ bei einer Härte ausgebildet ist, die größer ist als diejenige der Oberschicht (13) und vorzugsweise etwa 60 bis 75, insbesondere aber etwa 65 bis 70 Shore A beträgt.

2. Fahrzeugluftreifen nach Anspruch 1, dadurch gekennzeichnet, daß die Grundschicht (14) folgende Bestandteile aufweist:

   SBR: 50 bis 100 Teile
   BR : 50 bis   0 Teile
   Rußfüllung:  45 bis 60 K %.

3. Fahrzeugluftreifen nach Anspruch 1, dadurch gekennzeichnet, daß die Grundschicht (14) nach Art einer Sommerlaufschicht für Fahrzeugluftreifen ausgebildet ist und eine Naßrutschfestigkeit hat, die größer ist als diejenige der Oberschicht (13).

4. Fahrzeugluftreifen nach Anspruch 3, dadurch gekennzeichnet, daß die Naßrutschfestigkeit etwa 4 bis 7 % größer ist.

5. Fahrzeugluftreifen nach Anspruch 1, dadurch gekennzeichnet,

daß die Trennfläche zwischen der Oberschicht (13) und der Grundschicht (14) oberhalb (radial außerhalb) des Grundes der Profilvertiefungen (12) angeordnet ist.

6. Fahrzeugluftreifen nach Anspruch 5, dadurch gekennzeichnet, daß sich die Trennfläche (16) etwa 4 mm (Maß a) oberhalb des Profilgrundes befindet.

7. Fahrzeugluftreifen nach Anspruch 1, dadurch gekennzeichnet, daß bei einer Trennfläche (16), die im wesentlichen parallel zur Krümmung des Mittelteiles der Lauffläche (5) verläuft. zu beiden Seiten der Gürtelränder ein sich bis auf die Außenfläche der Karkasse (1) erstreckender Abschnitt (18) von etwa dreieckförmiger Gestalt befindet, der aus der Kautschukmischung für die Grundschicht (14) besteht.

8. Fahrzeugluftreifen nach Anspruch 7, dadurch gekennzeichnet, daß die Trennfläche (16) in der Außenhaut des Fahrzeugluftreifens nahe unterhalb der Rundschulter (6) oder nahe (1 bis 4 mm) hiervor endet.

9. Fahrzeugluftreifen nach Anspruch 1, dadurch gekennzeichnet. daß sich der dynamische Verlustmodul zum dynamischen Elastizitätsmodul verhält wie etwa 2,5 : 10 bis 4 : 10.